# FASCICULE DE BREVET EUROPEEN

(11) **EP 3 386 866 B1**
(45) Date de publication et mention de la délivrance du brevet: **11.08.2021**
(21) Numéro de dépôt: 16819623.6
(22) Date de dépôt: 08.12.2016
(51) Int. Cl.: B65B 23/20, B65B 61/22, B65D 81/05, B65B 5/04, B65D 77/24, B65D 85/38

(54) **PROCEDE D'EMBALLAGE D'UN VERRE DE LUNETTE**
VERFAHREN ZUR VERPACKUNG EINES BRILLENGLASES
METHOD FOR PACKAGING A SPECTACLE LENS

(30) Priorité: 10.12.2015 FR 1562110
(43) Date de publication de la demande: 17.10.2018
(73) Titulaire: Essilor International, 94220 Charenton-le-Pont (FR)
(72) Inventeur: HENRY, Patrick, 94227 Charenton-le-Pont (FR)
(74) Mandataire: Ipsilon
(86) Numéro de dépôt international: PCT/FR2016/053280
(87) Numéro de publication internationale: WO 2017/098168

(56) Documents cités:
- EP-A2- 2 275 360
- DE-A1-102013 019 921
- FR-A1- 2 913 006
- JP-A- H1 059 453
- JP-A- H1 111 562
- JP-A- 2007 099 313
- NL-A- 8 700 276
- US-A- 5 454 469

## Description

L'invention se rapporte à un procédé d'emballage d'un verre de lunette. Plus spécifiquement, un tel emballage est conçu pour faciliter le transport et la manipulation du verre.

Généralement, un verre destiné à être monté sur une monture de lunette, va inéluctablement subir une phase de transport, soit pour être acheminé vers un atelier où il sera usiné plus finement afin d'être directement prêt à être fixé à la monture appropriée, soit s'il est déjà usiné pour être acheminé par exemple chez un opticien, qui procédera alors à la fixation de celui-ci sur ladite monture.

Cette phase de transport est rendue délicate car ces verres ont souvent subi un traitement de surface, pour par exemple empêcher les reflets et/ou favoriser un écoulement d'eau, ledit traitement étant sensible à tout type de contact extérieur. Ainsi, un contact avec les doigts d'une main ou avec la paroi d'un emballage de transport, peut vite dégrader ce traitement de surface et rendre le verre inutilisable.

Une première solution permettant de transporter ce type de verre tout en le préservant d'un contact extérieur, consiste à le placer tel quel, dans une enveloppe souple et légère. Une fois inséré dans l'enveloppe, le verre est au contact de ladite enveloppe. Or, il s'est avéré que le verre était amené à bouger dans ladite enveloppe, engendrant des frottements susceptibles d'abimer le traitement de surface dudit verre.

Afin de remédier à ces frottements nuisibles, une deuxième solution consiste à placer un film de protection, par exemple en mousse, sur la surface interne de la paroi de l'enveloppe, afin d'adoucir les conditions de contact entre le verre et la paroi de l'enveloppe et donc limiter la dégradation du traitement de surface du verre. Or, l'implantation d'un tel film augmente les coûts d'emballage et n'empêche pas une personne désireuse d'extraire le verre de l'enveloppe, de laisser des traces de doigts sur le verre pouvant dégrader le traitement de surface du verre.

Une troisième solution, utilisée seule ou en combinaison avec l'une des précédentes, consiste à apposer une pastille de protection, par exemple un film plastique souple, directement sur le verre afin de protéger la surface traitée. Or, pour être pleinement efficace, cette pastille de protection doit préférentiellement être centrée sur ladite surface. Il en résulte un surcoût important occasionné par le coût de cette pastille ainsi que celui de son temps de dépose, sans omettre la condition qu'elle n'est pas compatible avec les verres qui demandent la dépose préalable d'encre de traçage.

Une quatrième solution a été de créer des emballages rigides, dont les dimensions sont adaptées à celles du verre, et dont la géométrie empêche tout contact du verre avec la paroi de ces emballages. Or, la fabrication de tels emballages rigides est onéreuse, et souvent chaque emballage n'est adapté qu'à une taille et une géométrie de verre, obligeant à fabriquer un emballage différent pour chaque type de verre rencontré.

Les demandes JPH1111562 et JP2007099313 décrivent un procédé d'emballage d'un verre optique comprenant une étape de dépôt d'une bande de protection autour dudit verre, une étape d'insertion du verre dans une enveloppe délimitée par une paroi, et une étape de mise en place dudit verre dans l'enveloppe de sorte que la bande de protection maintienne une distance entre ladite paroi et une face dudit verre.

Un procédé d'emballage d'un verre selon l'invention, permet de transporter et de manipuler ledit verre en préservant l'état de ses surfaces, tout en s'affranchissant des inconvénients relevés dans l'état de la technique.

L'invention a pour objet un procédé d'emballage d'un verre optique comportant deux faces et un bord périphérique, au moins l'une desdites faces présentant une convexité marquée par un point culminant.

La principale caractéristique d'un procédé d'emballage selon l'invention est qu'il comprend les étapes suivantes,
- une étape de dépôt d'une bande de protection d'un matériau rigide au moins partiellement le long dudit bord, la largeur de la bande s'étendant au-delà du point culminant de la face convexe du verre,
- une étape d'insertion du verre dans une enveloppe délimitée par une paroi,
- une étape de mise en place dudit verre dans ladite enveloppe, de sorte que la bande de protection sert d'entretoise afin de maintenir une distance entre la paroi de l'enveloppe et la face convexe dudit verre et ainsi empêcher tout contact entre ladite paroi et la face.

Cette bande rigide a pour but d'instaurer une distance entre la paroi de l'enveloppe et la face convexe du verre, afin d'éviter un contact direct entre ladite paroi et ladite face convexe du verre. En effet, en l'absence de cette bande de protection rien ne s'oppose à ce que la paroi de l'enveloppe ne vienne au contact de la face convexe du verre, avec un risque important de dégradation de l'état de surface de ladite face convexe. La bande de protection repousse la paroi de l'enveloppe afin de l'empêcher d'interférer avec la face convexe du verre. Cette bande sert également d'organe de préhension pour un individu désireux de manipuler le verre, évitant les traces de doigt sur le verre, susceptibles d'affecter la surface du verre. Il est important de souligner que cette bande n'a aucune fonction particulière liée au verre, et n'est que momentanément présente sur le verre, préférentiellement lors d'une phase de transport et/ou de manipulation. Le dépôt de cette bande contre le verre est réversible, ladite bande pouvant être retirée à tout moment. De façon préférentielle, le dépôt de la bande rigide s'effectue manuellement sans requérir l'utilisation d'un outil particulier. La bande doit demeurer rigide par rapport à des manipulations usuelles du quotidien, mais n'a pas vocation à être fabriquée dans un matériau ayant une résistance mécanique élevée, comme par exemple celle d'un métal ou d'une fibre de carbone, spécialement conçu pour résister à des efforts importants. En supposant que le verre possède un plan de base ayant la forme du contour du verre, ou correspondant au plan sur lequel le verre peut être posé de façon stable avec la face concave orientée vers ledit plan, le point culminant de la face convexe dudit verre est situé au droit du centre de ce plan. La bande est donc placée autour du verre et la largeur de la bande représente sa dimension selon une direction perpendiculaire audit plan de base. Il est préférentiellement supposé que la largeur de la bande est constante autour du verre. De façon avantageuse, la bande adhère au verre par collage. Le verre a préférentiellement un contour circulaire et la bande est assimilable à un cylindre creux. Il est a précisé que la bande recouvre au moins partiellement le bord périphérique du verre sur la largeur dudit verre. L'enveloppe peut par exemple être réalisée dans un matériau cellulosique, tel que par exemple du papier ou du carton, ou dans un polymère. Un tel procédé d'emballage peut par exemple être clôturé par une étape de fermeture de l'enveloppe contenant le verre.

Selon un mode de réalisation de l'invention, le verre est un verre fini apte à être monté sur une monture de lunette sans autre transformation qu'un usinage du contour.

Dans un mode particulier d'application de l'invention, le verre comporte sur sa face convexe une couche sensible à l'abrasion tel qu'un revêtement hydrophobe, oléophobe, une couche de protection pour un tel revêtement ou un marquage non permanent à l'encre, ledit marquage étant destiné à être éliminé par frottement.

Selon un mode de réalisation de l'invention, le procédé d'emballage comprend,
- une étape de dépôt d'une bande de colle le long du bord, et
- une étape d'application de la bande de protection contre ledit bord pour la solidariser par collage à celui-ci.

Ces deux étapes sont distinctes, l'étape du dépôt de colle précédant l'étape d'application de la bande contre le bord. La bande de colle le long du bord périphérique peut être continue ou discontinue.

Selon un autre mode de réalisation de l'invention, le procédé d'emballage selon l'invention comprend,
- une étape de déroulement d'un rouleau d'une bande de protection adhésive,
- une étape d'application de la bande de protection au fur et à mesure qu'elle se déroule, contre le bord du verre pour solidariser ladite bande audit bord.

Ces deux étapes sont par exemple simultanées. Un procédé comprenant ces deux étapes est rapide et facile à mettre en œuvre en s'affranchissant notamment d'une étape de dépôt d'une colle.

Selon l'invention, la bande de protection s'étend sur la totalité de la longueur du bord périphérique. Une telle bande correspond à une configuration optimisée offrant une prise confortable pour se saisir de l'ensemble constitué par le verre et ladite bande. De plus, une telle bande de protection empêche à coup sûr tout contact de la paroi avec la face convexe du verre.

Selon l'invention, les deux extrémités de la bande de protection se chevauchent, renforçant la tenue mécanique de ladite bande. En effet, au niveau de la zone de recouvrement des deux extrémités, l'épaisseur de la bande est doublée, augmentant la rigidité de la bande.

Selon l'invention, les deux extrémités de la bande de protection se chevauchent, et peuvent par exemple former un chevauchement sur au moins 1 cm, de préférence sur au moins 2 cm, renforçant la tenue mécanique de ladite bande.

Selon une variante de ce mode de réalisation de l'invention, la bande de protection comporte avant le dépôt, un film support comportant une face adhésive et une deuxième face recouverte d'une couche apte à être pelée et adhérant peu à la face adhésive ; le dépôt de la bande de protection se faisant par application de la face adhésive sur le verre. Alors ladite couche apte à être pelée, est retirée lors du dépôt de façon à ce que le chevauchement se fasse directement entre une partie de la face adhésive et la deuxième face du film support

Selon l'invention, la bande de protection est au moins partiellement élastique et est mise sous tension lorsqu'elle est déposée autour du bord périphérique du verre ou vient adhérer au bord du verre par une simple mise sous tension ladite bande présentant deux extrémités se chevauchant et aptes à être fixées l'une à l'autre. Autrement dit, la bande de protection est tirée autour du bord périphérique du verre en étant juste apposée sur ledit bord sans forcément nécessiter l'utilisation d'un quelconque matériau adhésif. Les deux extrémités de ladite bande sont alors fixées l'une à l'autre par tout moyen, alors que la bande est toujours sous un état de tension autour du bord du verre. La fermeture de la bande par l'intermédiaire d'une coopération étroite entre les deux extrémités suffit à maintenir de façon stable et robuste la bande de protection autour du verre. Par exemple, la bande peut être adhésive sur elle-même. Ce mode de réalisation permet par exemple de se passer d'une adhésion de la bande de protection sur le bord du verre. Cependant, ce mode de réalisation peut se combiner à l'utilisation d'un adhésif entre la bande de protection et le bord du verre, par exemple lorsque le verre est un verre fini à bord périphérique très mince, en particulier d'épaisseur inférieure à 2mm, voir inférieur à 1mm ou même inférieur à 0,5mm. La conjonction de l'utilisation d'un adhésif et de la mise sous tension élastique de la bande permet d'assurer un maintien stable et robuste en dépit d'une épaisseur du bord très faible.

Dans un mode particulier, la mise sous tension de la bande provoque une légère déformation plastique de la bande de protection.

Préférentiellement, la bande de protection dépasse le point culminant d'une distance d'au moins 1mm.

De façon avantageuse, la bande de protection dépasse le point culminant d'une distance comprise entre 2mm et 5mm, et de préférence entre 3mm et 5mm.

Avantageusement, la bande de protection est déposée par collage sur le bord du verre, la largeur de la bande de colle s'étendant sur au moins 2 mm sur la largeur du bord, sauf à couvrir toute la largeur du bord du verre pour une épaisseur du bord du verre inférieure au moins localement à 2mm.

Avantageusement, la largeur de la bande de colle le long du bord s'étend au moins partiellement sur toute la largeur dudit bord, la largeur dudit bord correspondant à l'épaisseur du verre.

Selon un mode de réalisation de l'invention, la largeur de la bande de protection en contact avec le bord périphérique est inférieure à 7mm, de préférence inférieure à 5mm. En effet, il n'est pas nécessaire que la colle destinée à la bande de protection s'étende sur toute la largeur du bord périphérique du verre, car ladite colle sert juste à fixer temporairement la bande de protection autour du verre.

De façon préférentielle, la largeur de la bande de colle s'étend sur toute la largeur du bord pour un verre fini d'épaisseur au bord inférieure à 7mm ou 5mm. La largeur d'un verre fini est généralement faible, souvent inférieure à 7mm ou à 5 mm, et pour que la bande de protection soit solidarisée efficacement et de façon stable autour dudit verre, il est nécessaire que la largeur de la bande de colle soit la plus importante possible.

Alternativement, pour un verre semi fini voué à être retravaillé par usinage de sa face concave afin d'apporter une prescription prédéterminée et de former un verre fini, et pour un verre fini ayant un bord périphérique d'épaisseur supérieure à 5mm ou même 7mm, la bande de protection n'est pas en contact sur toute la largeur du bord périphérique. Par exemple la largeur du bord périphérique n'est pas en contact avec la bande de protection sur 1mm à 10mm.

Dans un mode particulier de réalisation, la largeur de la bande de colle s'étend sur moins de la moitié de la largeur du bord pour un verre semi-fini. L'épaisseur d'un verre semi-fini est généralement importante, souvent de l'ordre de 7 à 20 mm, et il n'est alors pas nécessaire que la bande de colle s'étale sur la totalité de la largeur du bord périphérique dudit verre.

De façon avantageuse, l'épaisseur de la bande de colle est supérieure à 1mm.

Avantageusement, la bande de protection est un ruban adhésif rigide et de faible épaisseur, réalisé au moins partiellement dans un matériau cellulosique et/ou d'un film plastique. Par exemple, la bande de protection peut être réalisée en papier ou en carton. Le film plastique peut être, soit transparent, soit opaque, comme par exemple un film thermoplastique. La bande de protection peut être ainsi une bande de ruban adhésif.

De façon alternative, la bande de protection est en mousse polymérique. Cette mousse peut-être plus ou moins dense en fonction du poids du verre ainsi que des contraintes de transport et/ou de manipulation rencontrées.

Avantageusement, un procédé d'emballage selon l'invention comprend une étape de marquage de la bande de protection. Ce marquage peut s'effectuer, soit sous la forme d'un code-barres ou d'un QR code (code bidimensionnel) pouvant être lu au moyen d'un lecteur électronique adapté, soit sous la forme d'un dessin et/ou de lettres reconnaissables formant (ou non) des mots usuels. Le code-barres peut par exemple receler certaines des informations possibles concernant le verre : son origine, ses dimensions, ses caractéristiques optiques et dimensionnelles, sa date et son lieu de fabrication, son numéro de lot, etc. Le dessin peut par exemple être représentatif d'une marque commerciale. Les lettres peuvent former un texte précisant toutes les informations relatives au verre en lieu et place d'un code-barres ou d'un QR code.

De façon préférentielle, le marquage est visible et comporte au moins un signe distinctif représentatif d'une marque commerciale. Cette marque peut par exemple représenter l'entreprise fabriquant ou commercialisant le verre.

De façon avantageuse, le marquage comporte au moins une information servant à caractériser le verre. Cette information peut par exemple concerner l'origine du verre, ses dimensions, ses caractéristiques optiques et dimensionnelles, sa date et son lieu de fabrication, son numéro de lot, etc.

Préférentiellement, un procédé d'emballage selon l'invention est réversible, le retrait de la bande de protection s'effectuant manuellement en ne laissant subsister aucune trace liée à la présence de ladite bande de protection contre ledit bord. En effet, un procédé d'emballage selon l'invention doit être réversible afin de restituer le verre dans l'état dans lequel il se trouvait avant la solidarisation de la bande. Un procédé d'emballage selon l'invention est temporaire, et est réalisé juste pour répondre à des exigences liées à une phase de transport et/ ou de manipulation du verre.

Selon certaines variantes, la bande de protection présente des zones renforcées. Ces zones renforcées peuvent par exemple être assurées par des inserts disposés régulièrement le long de ladite bande. Les inserts peuvent par exemple être en matériau cellulosique ou plastique ; ils peuvent être du même matériau que la bande de protection, fournissant ainsi localement une épaisseur supplémentaire à la bande de protection.

Selon un autre mode de réalisation, ces zones renforcées sont matérialisées par des zones d'ondulations de la bande. De cette manière, ces zones d'ondulation peuvent être, soit continues de sorte que la bande de protection soit ondulée sur tout son pourtour, soit discontinues de sorte que ces zones soient régulièrement réparties le long de la bande. Ces ondulations peuvent être formées d'une boucle de bande repliée sur elle-même, de façon à ce qu'il n'y ait pas, ou peu, de surface du bord du verre qui ne soit pas en contact avec la bande, ou ces ondulations peuvent former un arc, par exemple en vue de dessus, tel que localement une partie du bord du verre soit dépourvu de contact direct avec la bande. Alors, les ondulations forment des zones où l'adhésif a un rayon de courbure inférieur à celui du verre, par exemple d'un facteur 2 à 1000, par exemple 10 à 500, soit des rayons de courbure compris entre 0.02mm et 4mm. Ces zones à forte courbure, et faible rayon de courbure, créent des renforts ayant une forte résistance à l'écrasement par rapport à la bande de protection sous forme planaire, et même par rapport à la bande de protection arrangée autour du verre avec un rayon de courbure correspondant à celui du verre, soit entre 1 cm et 4,5 cm selon que le verre soit détouré à la forme ou non.

Selon un mode de réalisation, l'enveloppe présente deux faces planes entre lesquelles est inséré le verre de façon à ce que chacune desdites faces se retrouve en vis-à-vis d'une face dudit verre, l'agencement entre la bande de protection et le verre empêchant la face de l'enveloppe située en vis-à-vis de la face convexe du verre de venir en contact avec ladite face convexe du verre. L'agencement entre la bande de protection et le verre est ainsi choisi de préférence pour empêcher la face de l'enveloppe située en vis-à-vis de la face convexe du verre de venir en contact avec ladite face convexe du verre, même lorsqu'une pression d'au moins 500g ou de préférence d'au moins 1kg, ou de préférence encore au moins 2kg, est appliqué sur la face de l'enveloppe.

Avantageusement, la combinaison de la bande de protection et de son agencement autour du verre est choisie de façon à ce que la structure ainsi réalisée soit capable de résister à une charge d'au moins 1kg. Cette résistance est mesurée au moyen d'un test calibré, dont les principales caractéristiques sont précisées ci-après.

La bande de protection est placée sur la périphérie du verre. Puis, la structure formée par le verre et la bande de protection est placée sur un support rigide horizontal, et est recouvert d'une plaque rigide permettant de répartir une charge posée sur la plaque sur la totalité de la circonférence de la bande de protection. Une charge de 800g est placée au centre de la plaque.

On observe ensuite le comportement de la bande de protection vis-à-vis de cette charge de 800g, pour notamment voir si elle se déforme, ou voir si la plaque entre en contact avec la surface convexe du verre.

Une charge supportée par la structure peut ainsi être déterminée si la bande de protection n'est pas déformée et si la plaque n'est pas entrée en contact avec la surface convexe du verre.

Il est ensuite procédé à une augmentation de la charge par incréments de 200g.

Ainsi, la structure selon l'invention est constituée de manière à ce que la charge supportée soit au moins d'environ 1kg, de préférence supérieure ou égale à 2kg, par exemple comprise entre 2kg et 10kg.

L'invention a pour autre objet un ensemble constitué par un verre et une bande de protection selon la revendication 11.

Selon un mode de réalisation lequel le verre est fini et de faible épaisseur ou est semi fini et de plus forte épaisseur, ledit verre présentant une face convexe, la bande de protection étant déposée sur la totalité de la largeur du bord périphérique du verre si le verre est fini ou uniquement sur une partie du bord périphérique du verre située du côté de ladite face convexe si le verre est semi fini, de manière à s'étendre du côté de la face convexe et à dépasser le point culminant de cette face.

Dans un mode de réalisation, la bande est en élastomère, par exemple une mousse, présentant une extrémité repliée et apte à venir adhérer à une face du verre qui est opposée à la face convexe. De cette manière, l'extrémité repliée peut elle-même être collée au verre. Cette extrémité repliée présente une très faible longueur et s'étend préférentiellement sur moins de 10% du rayon du verre si celui était circulaire, ou mois de 5% de la plus grande dimension dudit verre si celui-ci avait une autre forme.

Un procédé d'emballage selon l'invention présente l'avantage d'être simple et rapide à mettre en œuvre dans la mesure où il ne nécessite aucun outillage spécifique ni aucune manipulation compliquée requérant de la précision. Il a de plus l'avantage d'être réversible de façon tout aussi simple et rapide, en permettant une restitution du verre dans son état d'origine, sans faire apparaitre la moindre modification au niveau de sa structure ou de son état de surface. Il présente enfin l'avantage d'être peu coûteux car il requiert l'utilisation d'une bande adhésive ne nécessitant aucun dimensionnement compliqué.

On donne ci-après, une description détaillée d'un mode de réalisation d'un procédé d'emballage d'un verre selon l'invention, en se référant aux figures suivantes :
- La figure 1 est une vue simplifiée en perspective d'un verre et d'une bande de protection pour la réalisation d'un ensemble selon l'invention,
- La figure 2 est une vue simplifiée de côté d'un premier mode de réalisation d'un ensemble selon l'invention constitué par un verre semi fini et une bande de protection,
- La figure 3 est une vue simplifiée de côté d'un deuxième mode de réalisation d'un ensemble selon l'invention constitué par un verre fini et une bande de protection,
- La figure 4 est une vue simplifiée de côté d'un exemple d'un ensemble qui ne relève pas de l'invention et qui est constitué par un verre fini et par une bande de protection en plusieurs segments,
- La figure 5 est une vue simplifiée de côté d'un quatrième mode de réalisation d'un ensemble selon l'invention, constitué par un verre et une bande de protection en mousse,
- La figure 6 est une vue en perspective d'un ensemble constitué d'un verre et d'une bande de protection en cours d'introduction dans une pochette souple d'emballage et illustrant une étape d'un procédé d'emballage selon l'invention,
- La figure 7 est une vue en perspective de la pochette de la figure 6 enfermant un ensemble selon l'invention, constitué par un verre et une bande de protection.

Dans la description détaillée qui va suivre, il est supposé qu'une bande de protection est fixée par collage à un verre optique. En effet, une telle technique de fixation est particulièrement adaptée à un procédé d'emballage selon l'invention.

De plus il est entendu que le terme "verre" employé dans la présente description doit être compris selon la définition suivante : le verre ici mentionné correspond à un article optique du type d'une lentille ophtalmique, une visière oculaire, et des systèmes optiques à vue. En particulier une lentille ophtalmique est une lentille qui est conçue pour s'adapter à une monture de lunettes afin de protéger l'œil et / ou corriger la vue et peut être une lentille ophtalmique non-correctrice (également appelée piano ou afocal) ou correctrice. Une lentille correctrice peut être uni focale, bifocale, triple foyer ou une lentille progressive. La lentille ophtalmique peut être une lentille finie ou une lentille semi-finie, vouée à être retravaillée par usinage d'une de ses faces principales afin d'apporter une prescription prédéterminée, ou encore une lentille finie détourée ayant déjà ladite prescription prédéterminée et ayant un contour avec une forme adaptée à être positionnée dans une monture.

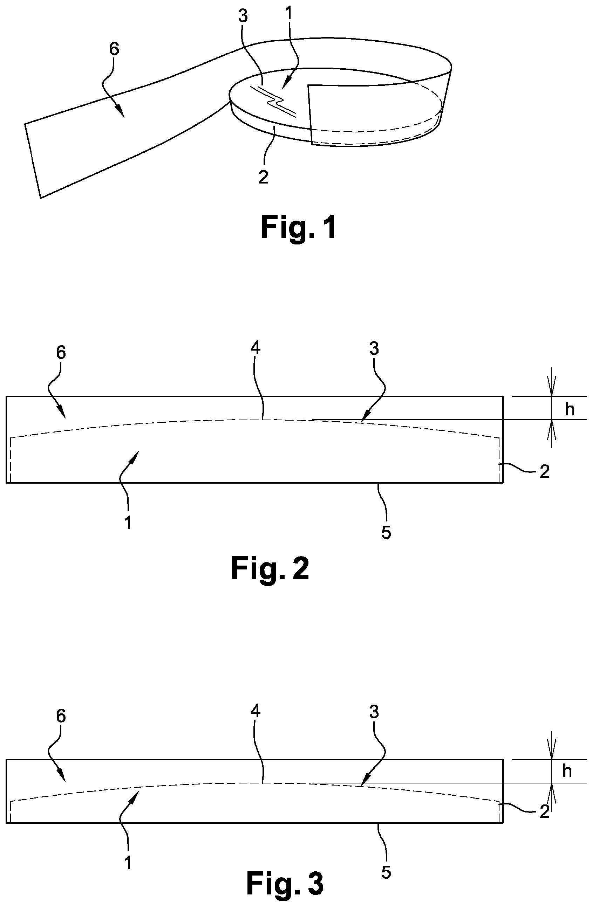

En se référant aux figures 1, 2, 3, 4 et 5 un verre optique 1 est de forme circulaire et est délimité par :
- un bord périphérique 2,
- une face convexe 3 présentant un point culminant 4 central et,
- une face plane 5 ou concave, ledit bord 2 périphérique reliant ladite face convexe 3 à ladite face plane 5 ou concave.

En se référant à la figure 2, le verre optique 1 peut-être semi-fini. Il s'agit d'un verre 1 qui sort de chez le fabriquant, avec un bord périphérique 2 ayant une largeur importante. Un tel verre 1 est destiné à être usiné plus finement pour apporter une prescription prédéterminée et devenir un verre fini ayant notamment un bord périphérique 2 de largeur réduite, comme le montre la figure 3. A titre d'information, le verre 1 fini comporte déjà une prescription prédéterminée et est apte à être monté sur une monture de lunette sans autre transformation qu'un usinage du contour. La largeur du bord périphérique 2 du verre 1 est sa dimension considérée le long de l'axe de révolution dudit verre 1. Que ce soit pour un verre 1 fini ou semi-fini, ce bord périphérique 2 présente une surface externe cylindrique. Pour un verre 1 semi-fini la largeur du bord périphérique 2 peut par exemple être de l'ordre de 7mm à 20mm. Celle d'un verre 1 fini est plutôt inférieure ou égale à 7mm ou même à 5mm.

Un mode de réalisation particulier de l'invention s'adresse à un verre 1 qui comporte sur sa face convexe 3 une couche sensible à l'abrasion tel qu'un revêtement hydrophobe, oléophobe, une couche de protection pour un tel revêtement ou un marquage non permanent à l'encre, ledit marquage étant destiné à être éliminé par frottement. Ces couches sont aisément abîmées lors du stockage et du transport des emballages des verres, si des précautions spécifiques ne sont pas prises ; le procédé selon l'invention permet avantageusement de protéger de telles couches et éviter qu'elles ne soient détériorées durant le stockage ou le transport du verre.

En se référant à la figure 1, un premier mode de réalisation d'un procédé d'emballage selon l'invention, comprend une étape de collage d'une bande de protection 6 sur toute la longueur du bord périphérique 2 du verre 1 fini ou semi-fini. Cette bande 6 de protection est réalisée dans un matériau cellulosique, pouvant par exemple être du papier ou du carton, dont une face seulement est adhésive, comprenant par exemple une couche de matériau adhésif. Dans un autre mode de réalisation, la bande 6 de protection est constitué d'un film plastique, tel qu'un film de matériau thermoplastique. Avant d'être appliquée contre le verre 1, cette bande 6 est enroulée autour d'une bobine pour former un rouleau. La face de la bande 6 de protection qui n'est pas adhésive, est ici recouverte par un film en polymère pouvant être transparent ou non. Avantageusement, cette bande 6 de protection comporte un marquage en lien direct avec le verre 1 auquel elle adhère. Ce marquage peut par exemple représenter un logo représentatif de l'entreprise qui fabrique le verre 1, ou bien citer directement le nom de cette entreprise. Il peut également mentionner plusieurs informations relatives au verre 1, comme par exemple, son origine, ses dimensions, ses caractéristiques optiques et dimensionnelles, sa date et son lieu de fabrication, son numéro de lot, etc. Ce marquage peut également apparaitre sous la forme d'un code-barres ou d'un QR code (code bidimensionnel), recelant toutes les informations précédentes. L'application d'un lecteur électronique sur ces différents codes permet alors d'avoir accès à toutes ces informations. La bande de protection doit être légère par rapport au poids total du verre 1, et doit pouvoir être manipulée aisément sans l'utilisation d'un outil et sans précaution particulière.

Un procédé d'emballage selon l'invention comprend une étape de déroulement du rouleau de bande 6 de protection, et une étape simultanée d'application de la face adhésive de ladite bande 6 contre le bord périphérique 2 du verre 1. Cette bande de protection 6 présente une certaine rigidité, qui la rend indéformable lors de sollicitations manuelles usuelles, telles que par exemple, une prise en main ou un choc accidentel mineur contre une paroi. En revanche, cette bande de protection n'est pas nécessairement dimensionnée pour résister à des sollicitations importantes, comme pourrait par exemple le faire une bande de protection en métal ou en fibre de carbone. En particulier, lorsque la bande de protection 6 est présente sur tout le pourtour du verre 1, formant ainsi un cylindre, la rigidité de la structure ainsi formée est augmentée par rapport à la rigidité propre de la bande de protection 6. Ainsi, dans ce cas, la bande de protection 6 n'a besoin que d'une rigidité telle que la structure pseudo-cylindrique ait une rigidité qui puisse soutenir une charge d'au moins 1kg évalué selon la méthode présentée ci-dessous. Ainsi, il n'est pas nécessaire que la bande de protection 6 seule ait la rigidité nécessaire pour soutenir une charge d'au moins 1kg.

Autrement dit, la combinaison de la bande de protection 6 et de son agencement autour du verre 1 est choisie de façon à ce que la structure ainsi réalisée soit capable de résister à une charge d'au moins 1kg. Cette résistance est mesurée au moyen d'un test calibré, dont les principales caractéristiques sont précisées ci-après.

La bande de protection est placée sur la périphérie du verre. Puis, la structure formée par le verre et la bande de protection est placée sur un support rigide horizontal, et est recouvert d'une plaque rigide permettant de répartir une charge posée sur la plaque sur la totalité de la circonférence de la bande de protection. Une charge de 800g est placée au centre de la plaque.

On observe ensuite le comportement de la bande de protection vis-à-vis de cette charge de 800g, pour notamment voir si elle se déforme et si la plaque entre en contact avec la surface convexe du verre.

Une charge supportée par la structure peut ainsi être déterminée si la bande de protection n'est pas déformée et si la plaque n'est pas entrée en contact avec la surface convexe du verre.

Il est ensuite procédé à une augmentation de la charge par incréments de 200g.

Ainsi, la structure selon l'invention est constituée de manière à ce que la charge supportée soit au moins d'environ 1kg, de préférence supérieure ou égale à 2kg, par exemple comprise entre 2kg et 10kg.

Dans tous les modes de réalisation de l'invention cette bande 6 de protection est telle, qu'une fois collée sur le bord périphérique 2 du verre 1, la largeur de ladite bande 6 est suffisante pour pouvoir s'étendre au-delà du point culminant 4 de la face convexe 3 du verre 1. Idéalement, la bande de protection 6 doit dépasser le point culminant 4 de ladite face convexe 3 d'une distance h comprise entre 1 et 10mm, préférentiellement entre 2 et 5mm.

En se référant à la figure 3, lorsque le verre 1 est fini et possède un bord périphérique 2 d'une largeur réduite, par exemple inférieure à 5mm, la bande 6 de protection est collée sur toute la largeur dudit bord 2. Autrement dit, ladite bande 6 s'étend sur toute la largeur du bord périphérique 2, en venant affleurer l'extrémité dudit bord 2 à partir duquel prend naissance la face 5 plane ou concave du verre 1. Ce recouvrement complet du bord périphérique 2 du verre 1 par la bande 6 de protection, permet d'accroitre les conditions de contact entre ces deux éléments 2, 6 et d'assurer une certaine stabilité de positionnement de ladite bande 6 sur ledit verre 1. Un mauvais positionnement de la bande 6 de protection sur le verre 1 pourrait entraver la fonction de protection de la bande 6 vis-à-vis du verre 1.

En se référant à la figure 2, lorsque le verre est semi-fini, ou lorsque le verre fini a une puissance négative importante (par exemple -6.00 D), et possède un bord périphérique 2 d'une largeur importante, par exemple de l'ordre de 5 à 20mm ou de 7 à 20mm, il n'est pas forcément nécessaire que la bande 6 de protection recouvre ledit bord périphérique 2 sur l'intégralité de sa largeur. Il suffit que la surface de collage entre ladite bande 6 et ledit bord 2 ait une largeur d'au moins 2 à 5 mm pour assurer une bonne stabilité de positionnement de la bande 6 sur le verre 1. La partie du bord périphérique 2 située du côté de la face plane 5 ou concave, peut ainsi ne pas être recouverte par la bande de protection 6, sans pour autant affaiblir les conditions de contact entre la bande 6 de protection et ledit bord 2 périphérique.

En effet, le bord périphérique 2 du verre 1, qu'il soit fini ou semi-fini, n'ayant aucune fonction optique, ne doit donc pas forcément faire l'objet d'une protection particulière.

Sur les deux exemples illustrés aux figures 2 et 3, la bande 6 de protection entoure intégralement le verre 1 sur toute sa périphérie, autrement dit sur 360°. Il est possible que les deux extrémités de cette bande 6 se chevauchent pour assurer le recouvrement du verre 1 sur 360°. Cette zone de chevauchement bénéficiera d'une double épaisseur de bande 6, et renforcera localement la rigidité de la bande 6 de protection autour du verre 1. De plus, ce chevauchement permet d'augmenter la rigidité globale de la bande de protection en maintenant une forme de cylindre fermé.

Le chevauchement se fait alors généralement sur au moins 1 cm. Par exemple le chevauchement peut avoir une longueur comprise entre 1 cm et 5 cm, par exemple entre 2cm et 3cm.

Selon un mode de réalisation, la bande de protection comporte, avant d'être utilisée pour le procédé d'emballage, un film support comportant une face adhésive et une deuxième face recouverte d'une couche apte à être pelée et adhérant peu à la face adhésive. Le dépôt de la bande de protection se fait alors par application de la face adhésive sur le verre, ladite couche apte à être pelée étant retirée lors du dépôt de façon à ce que le chevauchement se fasse directement entre une partie de la face adhésive et la deuxième face du film support.

Selon un exemple de réalisation, la bande de protection utilisée est une bande adhésive de type Bluedge © et une bande adhésive de type Advantedge© distribuées par Dac Vision ®. Dans le cas de la bande de protection de type Bluedge®, la structure de ladite bande de protection est identique à celle du produit consommable Bluedge® utilisé dans l'industrie ophtalmique pour détourer les verres.

La bande de protection est appliquée autour du verre sans recouvrement ou avec un recouvrement inférieur à 1mm.

L'assemblage entre la bande de protection et le verre est ensuite inséré dans une enveloppe souple en papier.

Dans un autre exemple de réalisation, la bande de protection comporte un film support et un film apte à être pelé. Le film support est partiellement élastique, avec une force de tension supérieure à 20kN/m et une longueur avant rupture supérieure à 100% d'élongation en tension. Le film support est un film de PET (de l'anglais *Polyethylene terephthalate*) d'épaisseur 175µm. Le film apte à être pelé est un film de PET de 32µm. Le film support comporte sur la face non couverte par le film apte à être pelé une couche d'adhésif à base d'acrylique.

La bande de protection a une largeur de 18 ou 20mm.

Les verres sont des verres finis d'épaisseur inférieure à 7mm. En particulier au moins un verre d'épaisseur 3,1 mm et un verre d'épaisseur 0,5mm.

Lors du dépôt de la bande de protection autour du verre, la face comportant l'adhésif est appliquée sur le bord du verre, et une aide mécanique au maintien sur le bord du verre peut être appliqué. Le film apte à être pelé est retiré lors du dépôt. Lors de l'application du film autour du verre, une tension est appliquée d'environ 10kN et l'application continue autour du verre jusqu'à ce qu'une extrémité de la bande de protection chevauche l'autre extrémité sur environ 2cm à 3cm.

Dans le cas des verres d'épaisseur proche de 0,5mm, la bande adhésive est positionnée telle qu'au moins 1mm de la bande adhésive dépasse du côté concave du verre. Par ailleurs, la tension appliquée à la fois durant le dépôt et maintenue, par le chevauchement, suite au dépôt permet de bien maintenir le verre dans l'emballage formé par la bande de protection.

Dans le cas des verres d'épaisseur 3,1mm, la tension de la bande de protection lors du dépôt n'est pas nécessaire pour assurer un maintien du verre mais peut être néanmoins appliquée.

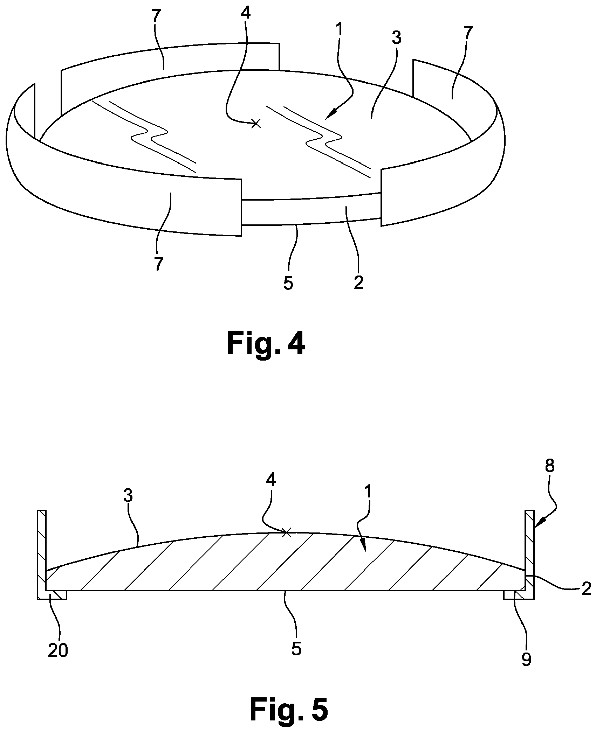

En se référant à la figure 4, selon un exemple d'un procédé d'emballage qui ne relève pas de l'invention, la bande de protection 6 peut se présenter sous la forme de plusieurs segments 7 séparés et répartis autour du bord périphérique 2 du verre 1. Préférentiellement ces segments 7 sont équitablement répartis autour du verre 1, afin de ne laisser subsister aucun espace trop important entre deux segments 7 successifs. La longueur totale de tous les segments 7 dépasse préférablement les 2/3 de la longueur totale du bord périphérique 2 du verre 1. Sur l'exemple considéré, la bande de protection 6 comprend trois segments 7 de longueur égale, répartis de façon homogène autour du verre 1. Le nombre maximum de segments 7 est préférentiellement inférieur à huit pour éviter de complexifier l'étape de collage de la bande 6 de protection sur le bord 2 périphérique du verre 1.

En se référant à la figure 5, selon un autre mode de réalisation d'un procédé de conditionnement selon l'invention, la bande de protection 6 peut se présenter sous la forme d'une mousse polymérique 8, plus ou moins dense. Pour cette configuration, la mousse 8 est appliquée contre le bord périphérique 2 du verre 1 et comporte une extension plane 20 positionnée contre une zone périphérique 9 de la face plane 5 ou concave du verre 1. L'extension plane 20 est partie intégrante de la bande de protection en mousse. De cette manière, la mousse 8 est à la fois collée au bord périphérique 2 du verre 1 et contre la face plane 5 ou concave dudit verre 1. Cette mousse 8 peut également être réalisée à partir d'un matériau élastomère, afin de lui conférer des propriétés de déformation élastique. De plus, dans certains modes de réalisation il peut ne pas y avoir de matériau adhésif appliqué contre la zone périphérique 9, la zone périphérique 9 étant uniquement en contact avec un support en mousse 8 formé par l'extension plane 20. La présence de l'extension plane permet par exemple de protéger le bord aigue de la face concave contre des chocs et/ou aider au placement de la bande de protection 6 autour du verre.

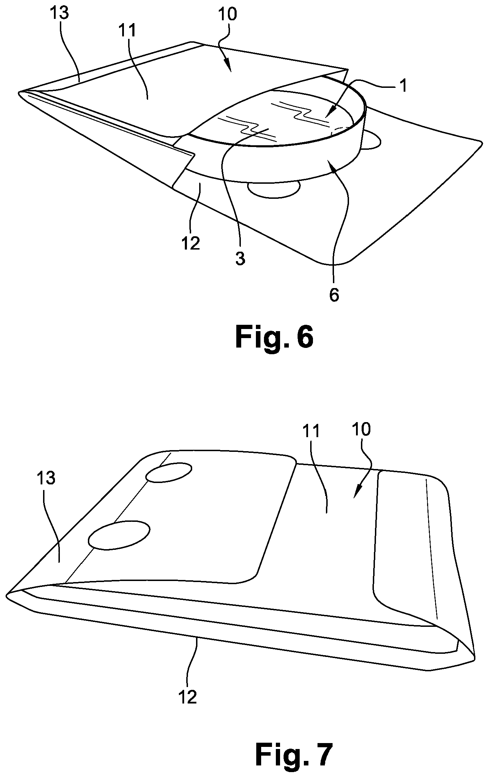

En se référant aux figures 6 et 7, un procédé d'emballage du verre 1 comprend les étapes suivantes :
- une étape de manipulation du verre 1 doté de la bande de protection 6, par l'intermédiaire de ladite bande 6. De cette manière, un individu manipulant le verre 1 par l'intermédiaire de la bande 6 de protection, n'est pas susceptible de laisser des traces de doigts sur ledit verre 1, qui pourraient affecter un éventuel traitement de surface dudit verre 1.
- une étape d'insertion du verre 1 dans une enveloppe 10 délimitée par deux faces 11, 12 reliées entre elles par une paroi de liaison 13 souple. Ces deux faces 11, 12 peuvent pivoter l'une par rapport à l'autre de quelques degrés au moins autour de la paroi de liaison 13, pour passer d'une position de fermeture pour laquelle elles sont au contact l'une de l'autre à une position d'ouverture maximale pour laquelle elles font entre elles un angle maximum de 30°. Préférentiellement, cette enveloppe 10 est réalisée dans un matériau cellulosique tel que par exemple du papier ou du carton, ladite enveloppe 10 étant partiellement recouverte par un film de renforcement en plastique. Cette insertion du verre 1 est réalisée entre les deux faces 11, 12 de l'enveloppe 10, de sorte que chacune desdites faces 11, 12 se retrouve en vis-à-vis d'une face 3, 5 du verre 1. Au moment de cette insertion, les deux faces 11, 12 de l'enveloppe sont écartées l'une de l'autre. En variante de réalisation, la paroi de liaison 13 peut présenter des plis et être assimilable à un soufflet apte à se déployer pour augmenter son épaisseur.
- une étape de mise en place dudit verre 1 dans ladite enveloppe 10, de sorte que la bande de protection 6 empêche tout contact entre la face souple 11 de l'enveloppe 10 située en vis-à-vis de la face convexe 3 du verre 1 et ladite face convexe 3. La bande 6 de protection joue le rôle d'une entretoise, séparant physiquement la face convexe 3 du verre 1 et la paroi souple 11 de l'enveloppe 10 de façon à éviter tout contact direct entre ces deux éléments.
- une étape de fermeture de l'enveloppe 10 renfermant l'ensemble constitué par le verre 1 et la bande de protection 6 solidarisée audit verre 1. En effet, l'une 11 desdites parois 11, 12 de l'enveloppe 10 est allongée par rapport à l'autre paroi 12, de sorte qu'elle pourra se rabattre sur celle-ci afin de clôturer l'enveloppe 10 enfermant le verre 1. Il est à noter que les deux faces 11, 12 de l'enveloppe peuvent également présenter une certaine souplesse et être légèrement déformables.

Pour d'autres enveloppes, les parois 11, 12 peuvent être adaptées pour s'éloigner ou se rapprocher l'une de l'autre par d'autres moyens que la rotation, par exemple par translation.

A l'issue de ce procédé d'emballage, le verre 1 est placé dans des conditions optimisées de transport.

## Revendications

1. Procédé de d'emballage d'un verre (1) optique comportant deux faces (3, 5) et un bord périphérique (2), au moins l'une (3) desdites faces présentant une convexité marquée par un point culminant (4), ledit procédé comprenant les étapes suivantes,
- une étape de dépôt d'une bande (6) de protection d'un matériau rigide sur la totalité de la longueur dudit bord (2), la largeur de la bande (6) s'étendant au-delà du point culminant (4) de la face convexe (3) du verre (1) et les deux extrémités de la bande (6) de protection se chevauchent, formant un chevauchement sur au moins 1 cm, de préférence sur au moins 2 cm, renforçant la tenue mécanique de ladite bande (6).
- une étape d'insertion du verre (1) dans une enveloppe (10) délimitée par une paroi (11, 12),
- une étape de mise en place dudit verre (1) dans ladite enveloppe (10), de sorte que la bande de protection (6) sert d'entretoise afin de maintenir une distance entre la paroi (11, 12) de l'enveloppe (10) et la face convexe (3) dudit verre (1) et ainsi empêcher tout contact entre ladite paroi (11, 12) et ladite face (3),
**caractérisé en ce que** la bande (6) de protection est au moins partiellement élastique et est mise sous tension lorsqu'elle est déposée autour du bord (2) périphérique du verre (1), les deux extrémités de ladite bande (6) étant fixées l'une à l'autre par tout moyen, alors que la bande est sous un état de tension autour du bord du verre.

2. Procédé d'emballage selon la revendication 1, dans lequel le verre (1) est un verre fini apte à être monté sur une monture de lunette sans autre transformation qu'un usinage du contour.

3. Procédé d'emballage selon l'une des revendications précédentes, dans lequel le verre (1) comporte sur sa face convexe (3) une couche sensible à l'abrasion tel qu'un revêtement hydrophobe, oléophobe, une couche de protection pour un tel revêtement ou un marquage non permanent à l'encre, ledit marquage étant destiné à être éliminé par frottement.

4. Procédé d'emballage selon l'une des revendications précédentes, dans lequel la largeur de la bande (6) de protection en contact avec le bord périphérique (2) est inférieure à 7mm, de préférence inférieure à 5mm.

5. Procédé d'emballage selon la revendication 4, dans lequel le verre (1) est soit un verre semi fini voué à être retravaillé par usinage de sa face concave (5) afin d'apporter une prescription prédéterminée et de former un verre fini, soit un verre fini ayant un bord périphérique d'épaisseur supérieure à 5 mm ou même 7 mm, dans lequel la bande (6) de protection n'est pas en contact sur toute la largeur du bord périphérique (2).

6. Procédé d'emballage selon la revendication 1, dans lequel la bande (6) de protection comporte avant le dépôt, un film support comportant une face adhésive et une deuxième face recouverte d'une couche apte à être pelée et adhérant peu à la face adhésive, le dépôt de la bande (6) de protection se faisant par application de la face adhésive sur le verre (1), ladite couche apte à être pelée étant retirée lors du dépôt de façon à ce que le chevauchement se fasse directement entre une partie de la face adhésive et la deuxième face du film support.

7. Procédé d'emballage selon l'une quelconque des revendications 1 à 5, dans lequel la bande (6) de protection dépasse le point culminant (4) d'une distance (h) d'au moins 1mm, préférentiellement comprise entre 2mm et 5mm, voire entre 3mm et 5mm.

8. Procédé d'emballage selon l'une quelconque des revendications 1 à 7, comprenant une étape de marquage de la bande (6, 8) de protection, le marquage comportant au moins une information servant à caractériser le verre.

9. Procédé d'emballage selon l'une quelconque des revendications 1 à 8, dans lequel l'enveloppe (10) présente deux faces planes (11, 12) entre lesquelles est inséré le verre (1) de façon à ce que chacune desdites faces (11, 12) se retrouve en vis-à-vis d'une face (3, 5) dudit verre (1), la combinaison entre la bande de protection (6) et l'agencement entre ladite bande de protection (6) et le verre (1) empêchant la face (11) de l'enveloppe (10) située en vis-à-vis de la face convexe (3) du verre (1) de venir en contact avec ladite face convexe (3) du verre (1), même lorsqu'une pression d'au moins 500g ou d'au moins 1kg est appliqué sur la face (11) de l'enveloppe (10).

10. Procédé d'emballage selon l'une quelconque des revendications 1 à 9, dans lequel la combinaison de la bande de protection (6) et de son agencement autour du verre (1) est choisie de façon à ce que la structure ainsi réalisée soit capable de résister à une charge d'au moins 1kg.

11. Ensemble constitué par un verre (1) et une bande (6, 8), ledit verre (1) comportant deux faces (3, 5) et un bord périphérique (2), au moins l'une (3) desdites faces présentant une convexité marquée par un point culminant (4), la bande (6) de protection s'étend sur la totalité de la longueur du bord périphérique (2) et la largeur de la bande (6) s'étend au-delà du point culminant (4) de la face convexe (3) du verre (1), les deux extrémités de la bande (6) de protection se chevauchant et formant un chevauchement sur au moins 1 cm, de préférence sur au moins 2 cm, renforçant la tenue mécanique de ladite bande (6), et **caractérisé en ce que** la bande (6) de protection est au moins partiellement élastique et est mise sous tension lorsqu'elle est déposée autour du bord (2) périphérique du verre (1), les deux extrémités de ladite bande (6) étant fixées l'une à l'autre par tout moyen, alors que la bande (6) est sous un état de tension autour du bord du verre.

12. Ensemble selon la revendication 11, dans lequel le verre (1) est fini et de faible épaisseur ou est semi fini et de plus forte épaisseur, ledit verre (1) présentant une face convexe (3), et en ce que la bande (6, 8) de protection est déposée sur la totalité de la largeur du bord périphérique (2) du verre (1) si le verre est fini ou uniquement sur une partie du bord (2) périphérique du verre (1) située du côté de ladite face convexe (3) si le verre est semi fini, de manière à s'étendre du côté de la face convexe (3) et à dépasser le point culminant (4) de cette face (3)

## Patentansprüche

1. Verfahren zur Verpackung eines optischen Glases (1), das zwei Seiten (3, 5) und einen Umfangsrand (2) aufweist, wobei mindestens eine (3) der Seiten eine Konvexität aufweist, die von einem Höhepunkt (4) gekennzeichnet ist, wobei das Verfahren die folgenden Schritte umfasst,
- einen Schritt des Aufbringens eines Schutzstreifens (6) eines starren Materials über die gesamte Länge des Rands (2), wobei sich die Breite des Streifens (6) über den Höhepunkt (4) der konvexen Seite (3) des Glases (1) hinaus erstreckt und sich die zwei Enden des Schutzstreifens (6) überlappen, wobei sie über mindestens 1 cm, vorzugsweise über mindestens 2 cm eine Überlappung bilden, die den mechanischen Halt des Streifens (6) verstärkt,
- einen Schritt des Einführens des Glases (1) in einen Umschlag (10), der von einer Wand (11, 12) begrenzt ist,
- einen Schritt des Einlegens des Glases (1) in den Umschlag (10), so dass der Schutzstreifen (6) als Abstandshalter fungiert, um einen Abstand zwischen der Wand (11, 12) des Umschlags (10) und der konvexen Seite (3) des Glases (1) beizubehalten und so jeglichen Kontakt zwischen der Wand (11, 12) und der Seite (3) zu verhindern, **dadurch gekennzeichnet, dass** der Schutzstreifen (6) wenigstens teilweise elastisch ist und unter Spannung gesetzt ist, wenn er um den Umfangsrand (2) des Glases (1) herum aufgebracht ist, wobei die zwei Enden des Streifens (6) durch ein beliebiges Mittel aneinander befestigt sind, während sich der Streifen in einem Spannungszustand um den Rand des Glases herum befindet.

2. Verpackungsverfahren nach Anspruch 1, wobei das Glas (1) ein fertiges Glas ist, das geeignet ist, ohne weitere Verarbeitung als eine Bearbeitung der Kontur auf einem Brillengestell angebracht zu werden.

3. Verpackungsverfahren nach einem der vorhergehenden Ansprüche, wobei das Glas (1) auf seiner konvexen Seite (3) eine abriebempfindliche Schicht wie eine hydrophobe, oleophobe Beschichtung, eine Schutzschicht für eine derartige Beschichtung oder eine nicht permanente Tintenkennzeichnung aufweist, wobei die Kennzeichnung dazu bestimmt ist, durch Reibung entfernt zu werden.

4. Verpackungsverfahren nach einem der vorhergehenden Ansprüche, wobei die Breite des Schutzstreifens (6), der mit dem Umfangsrand (2) in Kontakt steht, weniger als 7 mm, vorzugsweise weniger als 5 mm beträgt.

5. Verpackungsverfahren nach Anspruch 4, wobei das Glas (1) entweder ein halbfertiges Glas, das dazu bestimmt ist, durch Bearbeitung seiner konkaven Seite (5) nachbearbeitet zu werden, um einen vorbestimmten Sehwert aufzubringen und ein fertiges Glas zu bilden, oder ein fertiges Glas mit einem Umfangsrand einer Dicke größer als 5 mm oder sogar 7 mm ist, wobei der Schutzstreifen (6) nicht über die gesamte Breite des Umfangsrands (2) in Kontakt steht.

6. Verpackungsverfahren nach Anspruch 1, wobei der Schutzstreifen (6) vor dem Aufbringen einen Trägerfilm mit einer Haftseite und einer zweiten Seite, die mit einer Schicht bedeckt ist, die abziehbar ist und wenig an der Haftseite haftet, aufweist, wobei das Aufbringen des Schutzstreifens (6) durch Auftragen der Haftseite auf das Glas (1) erfolgt, wobei die abziehbare Schicht beim Aufbringen so entfernt wird, dass die Überlappung direkt zwischen einem Abschnitt der Haftseite und der zweiten Seite des Trägerfilms erfolgt.

7. Verpackungsverfahren nach einem der Ansprüche 1 bis 5, wobei der Schutzstreifen (6) um einen Abstand (h) von mindestens 1 mm, vorzugsweise zwischen 2 mm und 5 mm, ja sogar zwischen 3 mm und 5 mm über den Höhepunkt (4) hinausreicht.

8. Verpackungsverfahren nach einem der Ansprüche 1 bis 7, umfassend einen Schritt des Kennzeichnens des Schutzstreifens (6, 8), wobei die Kennzeichnung wenigstens eine Information aufweist, die dazu dient, das Glas zu charakterisieren.

9. Verpackungsverfahren nach einem der Ansprüche 1 bis 8, wobei der Umschlag (10) zwei ebene Seiten (11, 12) aufweist, zwischen denen das Glas (1) so eingeführt ist, dass sich jede der Seiten (11, 12) gegenüber einer Seite (3, 5) des Glases (1) befindet, wobei die Kombination aus dem Schutzstreifen (6) und der Anordnung zwischen dem Schutzstreifen (6) und dem Glas (1) verhindert, dass die Seite (11) des Umschlags (10), die sich gegenüber der konvexen Seite (3) des Glases (1) befindet, mit der konvexen Seite (3) des Glases (1) in Kontakt tritt, selbst wenn eine Druck von mindestens 500 g oder mindestens 1 kg auf die Seite (11) des Umschlags (10) ausgeübt wird.

10. Verpackungsverfahren nach einem der Ansprüche 1 bis 9, wobei die Kombination aus dem Schutzstreifen (6) und dessen Anordnung um das Glas (1) herum so gewählt ist, dass die so gebildete Struktur imstande ist, einer Belastung von mindestens 1 kg standzuhalten.

11. Anordnung, die von einem Glas (1) und einem Streifen (6, 8) gebildet ist, wobei das Glas (1) zwei Seiten (3, 5) und einen Umfangsrand (2) aufweist, wobei mindestens eine (3) der Seiten eine Konvexität aufweist, die von einem Höhepunkt (4) gekennzeichnet ist, wobei sich der Schutzstreifen (6) über die gesamte Länge des Umfangsrands (2) erstreckt und sich die Breite des Streifens (6) über den Höhepunkt (4) der konvexen Seite (3) des Glases (1) hinaus erstreckt, wobei sich die zwei Enden des Schutzstreifens (6) überlappen und über mindestens 1 cm, vorzugsweise über mindestens 2 cm eine Überlappung bilden, die den mechanischen Halt des Streifens (6) verstärkt, und **dadurch gekennzeichnet, dass** der Schutzstreifen (6) wenigstens teilweise elastisch ist und unter Spannung gesetzt ist, wenn er um den Umfangsrand (2) des Glases (1) herum aufgebracht ist, wobei die zwei Enden des Streifens (6) durch ein beliebiges Mittel aneinander befestigt sind, während sich der Streifen (6) in einem Spannungszustand um den Rand des Glases herum befindet.

12. Anordnung nach Anspruch 11, wobei das Glas (1) fertig ist und eine geringe Dicke aufweist oder halbfertig ist und eine stärkere Dicke aufweist, wobei das Glas (1) eine konvexe Seite (3) aufweist, und dadurch, dass der Schutzstreifen (6, 8) über die gesamte Breite des Umfangsrands (2) des Glases (1) aufgebracht ist, wenn das Glas fertig ist, oder nur auf einem Abschnitt des Umfangsrands (2) des Glases (1), der sich aufseiten der konvexen Seite (3) befindet, wenn das Glas halbfertig ist, so dass er sich aufseiten der konvexen Seite (3) erstreckt und über den Höhepunkt (4) dieser Seite (3) hinausreicht.

## Claims

1. Method for packaging an optical lens (1) having two faces (3, 5) and a peripheral edge (2), at least one (3) of said faces having a convexity marked by a peak point (4), said method comprising the following steps,
- a step of depositing a rigid material protective strip (6) along the entire length of said edge (2), the width of the strip (6) extending beyond the peak point (4) of the convex face (3) of the lens (1) and the two ends of the protective strip (6) overlapping, forming an overlap over at least 1 cm, preferably over at least 2 cm, increasing the mechanical strength of said strip (6),
- a step of inserting the lens (1) into an envelope (10) delimited by a wall (11, 12),
- a step of placing said lens (1) in said envelope (10) such that the protective strip (6) serves as a spacer in order to maintain a distance between the wall (11, 12) of the envelope (10) and the convex face (3) of said lens (1) and thus to prevent any contact between said wall (11, 12) and said face (3),
**characterized in that** the protective strip (6) is at least partially elastic and is tensioned when it is deposited around the peripheral edge (2) of the lens (1), the two ends of said strip (6) being fixed to one another by any means while the strip is tensioned around the edge of the lens.

2. Packaging method according to Claim 1, wherein the lens (1) is a finished lens that is able to be mounted on a spectacle frame with no transformation other than machining the contour.

3. Packaging method according to either of the preceding claims, wherein the lens (1) has on its convex face (3) a layer sensitive to abrasion such as a hydrophobic coating, an oleophobic coating, a protective layer for such a coating or a non-permanent ink marking, said marking being intended to be removed by rubbing.

4. Packaging method according to one of the preceding claims, wherein the width of the protective strip (6) in contact with the peripheral edge (2) is less than 7 mm, preferably less than 5 mm.

5. Packaging method according to Claim 4, wherein the lens (1) is either a semi-finished lens to be reworked by machining its concave face (5) in order to impart a predetermined prescription and to form a finished lens, or a finished lens having a peripheral edge with a thickness greater than 5 mm or even 7 mm, in which the protective strip (6) is not in contact across the entire width of the peripheral edge (2).

6. Packaging method according to Claim 1, wherein the protective strip (6) has, before deposition, a support film having an adhesive face and a second face covered with a layer that is able to be peeled off and weakly adheres to the adhesive face, the protective strip (6) being deposited by the adhesive face being applied to the lens (1), said layer that is able to be peeled off being removed at the time of deposition such that the overlap occurs directly between a portion of the adhesive face and the second face of the support film.

7. Packaging method according to any one of Claims 1 to 5, wherein the protective strip (6) extends beyond the peak point (4) by a distance (h) of at least 1 mm, preferably between 2 mm and 5 mm, or even between 3 mm and 5 mm.

8. Packaging method according to any one of Claims 1 to 7, comprising a step of marking the protective strip (6, 8), the marking including at least one item of information serving to characterize the lens.

9. Packaging method according to any one of Claims 1 to 8, wherein the envelope (10) has two flat faces (11, 12) between which the lens (1) is inserted such that each of said faces (11, 12) is located facing a face (3, 5) of said lens (1), the combination between the protective strip (6) and the arrangement between said protective strip (6) and the lens (1) preventing the face (11) of the envelope (10) located facing the convex face (3) of the lens (1) from coming into contact with said convex face (3) of the lens (1), even if a pressure of at least 500 g or at least 1 kg is applied to the face (11) of the envelope (10).

10. Packaging method according to any one of Claims 1 to 9, wherein the combination of the protective strip (6) and its arrangement around the lens (1) is chosen such that the structure that is produced in this way is capable of resisting a load of at least 1 kg.

11. Assembly formed by a lens (1) and a strip (6, 8), said lens having two faces (3, 5) and a peripheral edge (2), at least one (3) of said faces having a convexity marked by a peak point (4), the protective strip (6) extending along the entire length of the peripheral edge (2) and the width of the strip (6) extending beyond the peak point (4) of the convex face (3) of the lens (1), the two ends of the protective strip (6) overlapping and forming an overlap over at least 1 cm, preferably over at least 2 cm, increasing the mechanical strength of said strip (6), and **characterized in that** the protective strip (6) is at least partially elastic and is tensioned when it is deposited around the peripheral edge (2) of the lens (1), the two ends of said strip (6) being fixed to one another by any means while the strip (6) is tensioned around the edge of the lens.

12. Assembly according to Claim 11, wherein the lens (1) is finished and of small thickness or is semi-finished and of greater thickness, said lens (1) having a convex face (3), and in that the protective strip (6, 8) is deposited across the entire width of the peripheral edge (2) of the lens (1) if the lens is finished or over only a portion of the peripheral edge (2) of the lens (1) that is situated on the same side as said convex face (3) if the lens is semi-finished, so as to extend from the same side as the convex face (3) and beyond the peak point (4) of that face (3).
